# EUROPÄISCHE PATENTSCHRIFT

(11) **EP 3 035 429 B1**
(45) Veröffentlichungstag und Bekanntmachung des Hinweises auf die Patenterteilung: **01.08.2018**
(21) Anmeldenummer: 15199985.1
(22) Anmeldetag: 15.12.2015
(51) Int. Cl.: H01M 8/1253, C04B 35/488, B29C 35/00, G01N 27/407, H01M 8/124, B29L 31/34

(54) **KOMPOSITELEKTROLYT FÜR EINE FESTOXIDBRENNSTOFFZELLE, ABGASSONDE ODER HOCHTEMPERATUR-GASSENSOR**
COMPOSITE ELECTROLYTE FOR A SOLID OXIDE FUEL CELL, EXHAUST GAS PROBE OR HIGH-TEMPERATURE GAS-SENSOR
ÉLECTROLYTE COMPOSITE POUR UNE PILE À COMBUSTIBLE À OXYDE SOLIDE, SONDE DE GAZ D'ÉCHAPPEMENT OU CAPTEUR DE GAZ HAUTE TEMPÉRATURE

(30) Priorität: 19.12.2014 DE 102014019259
(43) Veröffentlichungstag der Anmeldung: 22.06.2016
(73) Patentinhaber: Airbus Defence and Space GmbH, 85521 Ottobrunn (DE)
(72) Erfinder: Ecke, Christian, 83024 Rosenheim (DE)
(74) Vertreter: LKGLOBAL Lorenz & Kopf PartG mbB Patentanwälte

(56) Entgegenhaltungen:
- JP-A- 2009 104 990
- US-A1- 2005 214 616
- US-A1- 2007 179 041
- US-A1- 2010 167 170

## Beschreibung

Die vorliegende Erfindung betrifft eine sinterbare Kompositelektrolyt-Zusammensetzung, einen gesinterten Kompositelektrolyt, ein Verfahren zur Herstellung eines gesinterten Kompositelektrolyts sowie die Verwendung des gesinterten Kompositelektrolyts in einer Brennstoffzelle, vorzugsweise einer Festoxidbrennstoffzelle, einer Abgassonde oder einem Hochtemperatur-Gassensor und eine Brennstoffzelle, vorzugsweise Festoxidbrennstoffzelle, Abgassonde oder Hochtemperatur-Gassensor enthaltend den gesinterten Kompositelektrolyt.

### Hintergrund der Erfindung

Produktionsbedingt ist es notwendig, einen per Additive Layer Manufacturing (ALM) oder per nicht konventionellem 3D Fertigungsverfahren, wie z.B. Webetechnik, gefertigten SOFC-Monobloc-Grünkörper gleich aus allen erforderlichen elektrochemisch aktiven Schichten zu fertigen. Dies bedingt, dass alle Schichten oder Materialien (Anode, Elektrolyt, Kathode), beispielsweise drei oder bis zu acht Schichten oder Materialien, bei ein und derselben Temperatur und Fügezeit co-gesintert werden müssen. Da mit steigender Sintertemperatur und Fügezeit die Materialien eine höhere Dichte erreichen und bei niedrigeren Temperaturen poröser bleiben, stehen die Notwendigkeit eines gasdichten Elektrolyten und möglichst poröser Elektroden im direkten Widerspruch zueinander. Ein Elektrolyt, der eine Dichte größer 5.90 g/cm³ besitzt gilt im Bereich der SOFC-Technologie als gasdicht.

Die US 2007/0179041 A1 offenbart ein Mehrkomponenten-Pulver zum Verschmelzen, um einen sinterbaren Grünkörper für eine Zirkonia-Keramik zu bilden. Das Mehrkomponentenpulver umfasst zumindest 80 Volumen% Zirkonia-Nanopartikel und bis zu 20 Volumen% eines Stabilisierungsmittels, dass eine Beschichtung um die Zirkonia-Nanopartikel herum bilden kann.

Die US 2010/0167170 A1 beschreibt Festoxidbrennstoffzellenelektrolyten, hergestellt durch Kombinieren eines Yttriumoxid-stabilisierten Zirkoniumpulvers mit α-Al₂O₃, das eine Teilchengröße im Bereich von ungefähr 10 nm bis ungefähr 200 nm aufweist, und Mn₂O₃, um eine Elektrolyt-Precursorzusammensetzung zu bilden und dann Sintern der Elektrolyt-Precursorzusammensetzung, um den Elektrolyten zu bilden.

Die JP2009104990 A beschreibt einen Festoxidbrennstoffzellenelektrolyten, der aus einem keramischen Rohmaterialpulver, das eine durchschnittliche Teilchengröße von 0,2 bis 1 µm aufweist, und Nanopartikeln, die eine durchschnittliche Teilchengröße von 10-100 nm aufweisen, hergestellt ist.

Die US 2005/0214616 A1 offenbart keramische Nanokompositelektrolyten, die aus chemisch stabilisierten Zirkonia, wie beispielsweise Yttriumoxid-stabilisiertem Zirkonia oder Scandium-stabilisierten Zirkonia, und einem heterogenen keramischen Dotierstoff hergestellt werden.

Es wäre somit wünschenswert eine sinterbare Kompositelektrolyt-Zusammensetzung bereitzustellen, die für eine Brennstoffzelle, vorzugsweise Festoxidbrennstoffzelle, Abgassonde oder Hochtemperatur-Gassensor verwendet werden kann und im gesinterten Zustand eine gute Ionenleitfähigkeit (O²⁻) aufweist. Ferner wäre es wünschenswert eine sinterbare Kompositelektrolyt-Zusammensetzung bereitzustellen, die per Additive Layer Manufacturing (ALM) oder per nicht konventionellem 3D Fertigungsverfahren, wie z.B. Webetechnik, verarbeitet werden kann. Des Weiteren wäre es wünschenswert eine sinterbare Kompositelektrolyt-Zusammensetzung bereitzustellen, die bei Sintertemperaturen von Tₛᵢₙₜₑᵣ ≤ 1300 °C und einer Fügezeit von t_{Füge} < 5 h dennoch gasdicht wird und ein gesintertes Produkt mit einer Dichte von ≥ 5.9 g/cm³ erhalten wird, das gleichzeitig dünn dimensionierbar ist, d.h. eine möglichst hohe mechanische Stabilität aufweist.

Aufgabe der vorliegenden Erfindung ist es daher, eine sinterbare Kompositelektrolyt-Zusammensetzung zur Verfügung zu stellen, die für eine Brennstoffzelle, vorzugsweise Festoxidbrennstoffzelle, Abgassonde oder Hochtemperatur-Gassensor verwendet werden kann und im gesinterten Zustand eine gute Ionenleitfähigkeit (O²⁻) aufweist. Des Weiteren ist eine Aufgabe der vorliegenden Erfindung, dass die sinterbare Kompositelektrolyt-Zusammensetzung per Additive Layer Manufacturing (ALM) oder per nicht konventionellem 3D Fertigungsverfahren, wie z.B. Webetechnik, verarbeitet werden kann. Ferner ist eine Aufgabe der vorliegenden Erfindung, dass die sinterbare Kompositelektrolyt-Zusammensetzung bei Sintertemperaturen von Tₛᵢₙₜₑᵣ ≤ 1300 °C und einer Fügezeit von t_{Füge} < 5 h verarbeitet werden kann und zu einem gasdichten Elektrolytkomposit führt, der eine Dichte von ≥ 5.9 g/cm³ aufweist und gleichzeitig dünn dimensionierbar ist, d.h. eine möglichst hohe mechanische Stabilität aufweist.

Diese Aufgaben werden durch die in den Ansprüchen definierten Gegenstände gelöst. Vorteilhafte Ausführungsformen sind Gegenstand von Unteransprüchen.

### Zusammenfassung der Erfindung

Ein erster Gegenstand der vorliegenden Erfindung ist dementsprechend eine sinterbare Kompositelektrolyt-Zusammensetzung, umfassend
a) ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon, und
b) ein in dem Elektrolyt verteiltes Material in einer Menge von 0.1 bis 15.0 Gew.-%, bezogen auf das Gesamtgewicht des Elektrolyts, wobei das Material eine durchschnittliche Partikelgröße *d*₅₀ von 1 bis 80 nm aufweist und mindestens zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon umfasst.

Die erfindungsgemäße sinterbare Kompositelektrolyt-Zusammensetzung kann per Additive Layer Manufacturing (ALM) oder per nicht konventionellem 3D Fertigungsverfahren, wie z.B. Webetechnik,verarbeitet werden. Ein weiterer Vorteil ist, dass die sinterbare Kompositelektrolyt-Zusammensetzung bei Sintertemperaturen von Tₛᵢₙₜₑᵣ ≤ 1300 °C und einer Fügezeit von t_{Füge} < 5 h zu einem Elektrolytkomposit führt, der gasdicht ist und eine Dichte von ≥ 5.9 g/cm³ aufweist und gleichzeitig dünn dimensionierbar ist. Ein weiterer Vorteil ist, dass die erfindungsgemäße sinterbare Kompositelektrolyt-Zusammensetzung im gesinterten Zustand eine gute Ionenleitfähigkeit (O²⁻) aufweist und somit für eine Brennstoffzelle, vorzugsweise Festoxidbrennstoffzelle, Abgassonde oder Hochtemperatur-Gassensor verwendet werden kann.

Beispielsweise umfasst die sinterbare Kompositelektrolyt-Zusammensetzung den Elektrolyt in einer Menge von 85 bis 99.9 Gew.-%, bezogen auf das Gesamtgewicht der Zusammensetzung.

Beispielsweise weist der Elektrolyt eine durchschnittliche Partikelgröße *d*₅₀ von 0.5 bis 5 µm aufweist und/oder der Elektrolyt eine Partikelgröße *d*₈₀ von < 5 µm auf.

Das in dem Elektrolyt verteilte Material umfasst mindestens zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon, bevorzugt mindestens drei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon.

Beispielsweise umfasst die sinterbare Kompositelektrolyt-Zusammensetzung das in dem Elektrolyt verteilte Material in einer Menge von 0.2 bis 10.0 Gew.-%, bezogen auf das Gesamtgewicht des Elektrolyts.

Beispielsweise weist das in dem Elektrolyt verteilte Material eine durchschnittliche Partikelgröße *d*₅₀ von 2 bis 50 nm auf.

Beispielsweise liegt das in dem Elektrolyt verteilte Material in Form von Nanopulver oder Nanofasern vor.

Beispielsweise umfasst die sinterbare Kompositelektrolyt-Zusammensetzung zusätzlich ein weiteres Material mit einer durchschnittlichen Partikelgröße *d*₅₀ von 1 bis 5 µm.

Beispielsweise umfasst die sinterbare Kompositelektrolyt-Zusammensetzung das weitere Material in einer Menge von 0.1 bis 1.0 Gew.-%, bezogen auf das Gesamtgewicht des Elektrolyts.

Die vorliegende Erfindung stellt ferner ein gesintertes Kompositelektrolyt zur Verfügung, umfassend die sinterbare Kompositelektrolyt-Zusammensetzung, wie hierin beschrieben.

Beispielsweise weist der gesinterte Kompositelektrolyt eine Dichte von ≥ 5.9 g/cm³ auf.

Die vorliegende Erfindung stellt ferner ein Verfahren zur Herstellung des gesinterten Kompositelektrolyts zur Verfügung, umfassend die Schritte
i) Bereitstellung einer sinterbaren Kompositelektrolyt-Zusammensetzung, wie hierin beschrieben,
ii) Sintern der sinterbaren Kompositelektrolyt-Zusammensetzung bei Temperaturen von ≤ 1300 °C und einer Fügezeit von < 5 h.

Ferner betrifft die vorliegende Erfindung die Verwendung des gesinterten Kompositelektrolyts, wie hierin beschrieben, in einer Brennstoffzelle, vorzugsweise einer Festoxidbrennstoffzelle, einer Abgassonde oder einem Hochtemperatur-Gassensor. Ebenso betrifft die vorliegende Erfindung eine Brennstoffzelle, vorzugsweise Festoxidbrennstoffzelle, Abgassonde oder Hochtemperatur-Gassensor enthaltend den gesinterten Kompositelektrolyt, wie hierin beschrieben.

### Detaillierte Beschreibung der Erfindung

Die vorliegende Erfindung betrifft eine sinterbare Kompositelektrolyt-Zusammensetzung, umfassend
a) ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon, und
b) ein in dem Elektrolyt verteiltes Material in einer Menge von 0.1 bis 15.0 Gew.-%, bezogen auf das Gesamtgewicht des Elektrolyts, wobei das Material eine durchschnittliche Partikelgröße *d*₅₀ von 1 bis 80 nm aufweist und mindestens zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon umfasst.

Der Begriff "sinterbar" bedeutet, dass feinkörnige, metallische und/oder metall-oxidische Materialien vermischt und unter erhöhter Temperatur verdichtet werden, wobei die Temperaturen unterhalb der Schmelztemperatur der Hauptkomponente bleiben.

Ein Erfordernis der vorliegenden Erfindung ist, dass die sinterbare Kompositelektrolyt-Zusammensetzung ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon umfasst.

Der Elektrolyt ist die Hauptkomponente der sinterbaren Kompositelektrolyt-Zusammensetzung.

In einer Ausführungsform der vorliegenden Erfindung umfasst die sinterbare Kompositelektrolyt-Zusammensetzung 8YSZ, 10Sc1CeSZ, 10Sc1AlSZ oder 10Sc2YbSZ, 3YSZ, 6ScSZ als Elektrolyt. Beispielsweise umfasst die sinterbare Kompositelektrolyt-Zusammensetzung 8YSZ oder 10Sc1CeSZ als Elektrolyt. Vorzugsweise umfasst die sinterbare Kompositelektrolyt-Zusammensetzung 10Sc1CeSZ als Elektrolyt.

In einer Ausführungsform der vorliegenden Erfindung liegt der Elektrolyt in der kubischen oder tetragonalen Kristallphase vor. Vorzugsweise liegt der Elektrolyt in der kubischen Kristallphase vor.

Zusätzlich oder alternativ weist der Elektrolyt eine ausreichende mechanische Stabilität auf. Beispielsweise weist der Elektrolyt eine mechanische Stabilität von 170 bis 550 MPa oder von 170 bis 350 MPa auf. Vorzugsweise weist der Elektrolyt eine mechanische Stabilität von 180 bis 250 MPa auf. Alternativ weist der Elektrolyt eine mechanische Stabilität von 210 bis 340 MPa auf.

In einer Ausführungsform der vorliegenden Erfindung hat der Elektrolyt eine Leitfähigkeit von 0.07 bis 0.25 S/cm oder von 0.07 bis 0.23 S/cm. Vorzugsweise hat der Elektrolyt eine Leitfähigkeit von 0.07 bis 0.09 S/cm. Alternativ hat der Elektrolyt eine Leitfähigkeit von 0.17 bis 0.23 S/cm.

Wie bereits oben erwähnt, stellt der Elektrolyt die Hauptkomponente der sinterbaren Kompositelektrolyt-Zusammensetzung dar. Die sinterbare Kompositelektrolyt-Zusammensetzung umfasst den Elektrolyt daher vorzugsweise in einer Menge von 85 bis 99.9 Gew.-%, bezogen auf das Gesamtgewicht der Zusammensetzung. Alternativ umfasst die sinterbare Kompositelektrolyt-Zusammensetzung den Elektrolyt in einer Menge von 90 bis 99.9 Gew.-%, bezogen auf das Gesamtgewicht der Zusammensetzung. Beispielsweise umfasst die sinterbare Kompositelektrolyt-Zusammensetzung den Elektrolyt in einer Menge von 90 bis 95 Gew.-%, bezogen auf das Gesamtgewicht der Zusammensetzung.

Um eine sinterbaren Kompositelektrolyt-Zusammensetzung mit ausreichender mechanischer Stabilität zu erzielen, ist es vorteilhaft, wenn der Elektrolyt eine bestimmte durchschnittliche Partikelgröße aufweist.

Insbesondere ist es vorteilhaft, wenn der Elektrolyt eine durchschnittliche Partikelgröße *d*₅₀ von 0.5 bis 5 µm aufweist. Beispielsweise weist der Elektrolyt eine durchschnittliche Partikelgröße *d*₅₀ von 0.7 bis 2.5 µm auf. Vorzugsweise weist der Elektrolyt eine durchschnittliche Partikelgröße *d*₅₀ von 0.9 bis 1.5 µm auf.

Wenn nicht anders angegeben, wurden alle Partikelgrößen per Laserstreuung bestimmt. Geräte und Verfahren zur Bestimmung von Partikelgrößen per Laserstreuung sind dem Fachmann bekannt.

Um die Sintertemperatur der sinterbaren Kompositelektrolyt-Zusammensetzung zu erniedrigen, ist es ein Erfordernis der vorliegenden Erfindung, dass die sinterbare Kompositelektrolyt-Zusammensetzung ein in dem Elektrolyt verteiltes Material in einer Menge von 0.1 bis 15.0 Gew.-%, bezogen auf das Gesamtgewicht des Elektrolyts, umfasst, wobei das Material eine durchschnittliche Partikelgröße *d*₅₀ von 1 bis 80 nm aufweist.

Für die sinterbare Kompositelektrolyt-Zusammensetzung ist es besonders vorteilhaft, wenn das in dem Elektrolyt verteilte Material homogen in dem Elektrolyt verteilt ist.

Alternativ kann das in dem Elektrolyt verteilte Material inhomogen in dem Elektrolyt verteilt sein.

Vorzugsweise ist das in dem Elektrolyt verteilte Material homogen in dem Elektrolyt verteilt.

Vorzugsweise umfasst die sinterbare Kompositelektrolyt-Zusammensetzung das in dem Elektrolyt verteilte Material in einer Menge von 0.1 bis 10.0 Gew.-% oder von 0.1 bis 7.5 Gew.-%, bezogen auf das Gesamtgewicht des Elektrolyts.

Das in dem Elektrolyt verteilte Material umfasst mindestens zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon. Beispielsweise umfasst das in dem Elektrolyt verteilte Material zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon.

Umfasst das in dem Elektrolyt verteilte Material mindestens zwei, vorzugsweise zwei, Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon, umfasst das in dem Elektrolyt verteilte Material vorzugsweise eine Mischung aus MgO und Al₂O₃.

Liegt das in dem Elektrolyt verteilte mindestens eine Material als Mischung aus MgO und Al₂O₃ vor, umfasst die Mischung MgO und Al₂O₃ vorzugsweise in einem bestimmten Gewichtsverhältnis. Beispielsweise liegen MgO und Al₂O₃ in einem Gewichtsverhältnis (Gew[MgO]/Gew[Al₂O₃]) von 10:1 bis 1:10 vor. Vorzugsweise liegen MgO und Al₂O₃ in einem Gewichtsverhältnis (Gew[MgO]/Gew[Al₂O₃]) von 5:1 bis 1:5 vor. In einer Ausführungsform liegen MgO und Al₂O₃ in einem Gewichtsverhältnis (Gew[MgO]/Gew[Al₂O₃]) von ungefähr 1:1 vor.

Alternativ umfasst das in dem Elektrolyt verteilte Material mindestens drei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon. Beispielsweise umfasst das in dem Elektrolyt verteilte Material drei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon.

Umfasst das in dem Elektrolyt verteilte Material mindestens drei, vorzugsweise drei, Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon, umfasst das in dem Elektrolyt verteilte Material vorzugsweise eine Mischung aus 8YSZ, Al₂O₃ und MgO.

Liegt das in dem Elektrolyt verteilte Material als Mischung aus 8YSZ, Al₂O₃ und MgO vor, umfasst die Mischung 8YSZ, Al₂O₃ und MgO vorzugsweise in einem bestimmten Gewichtsverhältnis. Beispielsweise liegen 8YSZ, Al₂O₃ und MgO in einem Gewichtsverhältnis (Gew[8YSZ]/Gew[Al₂O₃]/Gew[MgO]) von 20:1:1 bis 1:1:1 vor. Vorzugsweise liegen 8YSZ, Al₂O₃ und MgO in einem Gewichtsverhältnis (Gew[8YSZ]/Gew[Al₂O₃]/Gew[MgO]) von 15:1:1 bis 5:1:1 vor. In einer Ausführungsform liegen 8YSZ, Al₂O₃ und MgO in einem Gewichtsverhältnis (Gew[8YSZ]/Gew[Al₂O₃]/Gew[MgO]) von ungefähr 10:1:1 vor.

Die sinterbare Kompositelektrolyt-Zusammensetzung umfasst, vorzugsweise enthält, daher
a) ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon, und
b) mindestens zwei, bevorzugt mindestens drei, in dem Elektrolyt verteilte Materialien in einer Menge von 0.1 bis 15.0 Gew.-%, bezogen auf das Gesamtgewicht des Elektrolyts, wobei die Materialien eine durchschnittliche Partikelgröße *d*₅₀ von 1 bis 80 nm aufweisen und ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon sind.

In einer Ausführungsform umfasst, vorzugsweise enthält, die sinterbare Kompositelektrolyt-Zusammensetzung daher
a) ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon, und
b) zwei, bevorzugt drei, in dem Elektrolyt verteilte Materialien in einer Menge von 0.1 bis 15.0 Gew.-%, bezogen auf das Gesamtgewicht des Elektrolyts, wobei die Materialien eine durchschnittliche Partikelgröße *d*₅₀ von 1 bis 80 nm aufweisen und ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon sind.

Die sinterbare Kompositelektrolyt-Zusammensetzung kann das in dem Elektrolyt verteilte Material in unterschiedlichen Mengen umfassen.

Beispielsweise umfasst die sinterbare Kompositelektrolyt-Zusammensetzung das in dem Elektrolyt verteilte Material vorzugsweise in einer Menge von 2.5 bis 10.0 Gew.-% oder von 4.0 bis 7.5 Gew.-%, bezogen auf das Gesamtgewicht des Elektrolyts, wenn das in dem Elektrolyt verteilte Material 8YSZ darstellt.

Umfasst das in dem Elektrolyt verteilte Material mindestens ein Material ausgewählt aus der Gruppe umfassend Al₂O₃, MgO, Al, Mg und Mischungen hiervon, umfasst die sinterbare Kompositelektrolyt-Zusammensetzung das in dem Elektrolyt verteilte Material vorzugsweise in einer Menge von 0.2 bis < 2.5 Gew.-% oder von 0.3 bis 1.5 Gew.-%, bezogen auf das Gesamtgewicht des Elektrolyts.

In einer Ausführungsform der vorliegenden Erfindung weist das in dem Elektrolyt verteilte Material eine durchschnittliche Partikelgröße *d*₅₀ von 2 bis 50 nm auf. Beispielsweise weist das in dem Elektrolyt verteilte Material eine durchschnittliche Partikelgröße *d*₅₀ von 2 bis 10 nm oder von 5 bis 10 nm auf.

Beispielsweise liegt das in dem Elektrolyt verteilte Material in Form von Nanopulver oder Nanofasern vor.

In einer Ausführungsform der vorliegenden Erfindung kann die sinterbare Kompositelektrolyt-Zusammensetzung ein weiteres Material mit einer durchschnittlichen Partikelgröße *d*₅₀ von 1 bis 5 µm umfassen. Dies ist besonders vorteilhaft, um das Sinterverhalten des Kompositelektrolyts zu verbessern.

Beispielsweise umfasst die sinterbare Kompositelektrolyt-Zusammensetzung ein weiteres Material mit einer durchschnittlichen Partikelgröße *d*₅₀ von 1 bis 3 µm oder von 1.5 bis 2.5 µm.

Umfasst die sinterbare Kompositelektrolyt-Zusammensetzung ein weiteres Material, ist das weitere Material vorzugsweise MgO oder Al₂O₃.

In einer Ausführungsform umfasst die sinterbare Kompositelektrolyt-Zusammensetzung das weitere Material vorzugsweise in einer Menge von 0.1 bis 1.0 Gew.-%, bezogen auf das Gesamtgewicht des Elektrolyts. Beispielsweise umfasst die sinterbare Kompositelektrolyt-Zusammensetzung das weitere Material in einer Menge von 0.1 bis 0.8 Gew.-% oder von 0.2 bis 0.8 Gew.-%, bezogen auf das Gesamtgewicht des Elektrolyts. Vorzugsweise umfasst die sinterbare Kompositelektrolyt-Zusammensetzung das weitere Material in einer Menge von 0.3 bis 0.7 Gew.-% oder von 0.4 bis 0.6 Gew.-%, bezogen auf das Gesamtgewicht des Elektrolyts.

Aufgrund der Vorteile, die die sinterbare Kompositelektrolyt-Zusammensetzung bietet, betrifft die vorliegende Erfindung auch ein gesinterten Kompositelektrolyt, der die sinterbare Kompositelektrolyt-Zusammensetzung, wie hierin beschreiben, umfasst.

Die sinterbare Kompositelektrolyt-Zusammensetzung bietet den Vorteil, dass sie per Additive Layer Manufacturing (ALM) oder per nicht konventionellem 3D Fertigungsverfahren, wie z.B. Webetechnik,verarbeitet werden kann. Die sinterbare Kompositelektrolyt-Zusammensetzung bietet ausserdem den Vorteil, dass die sinterbare Kompositelektrolyt-Zusammensetzung bei Sintertemperaturen von Tₛᵢₙₜₑᵣ ≤ 1300 °C und einer Fügezeit von t_{Füge} < 5 h zu einem Elektrolytkomposit führt, der gasdicht ist und eine Dichte von ≥ 5.9 g/cm³ aufweist und gleichzeitig dünn dimensionierbar ist.

Der gesinterte Kompositelektrolyt weist somit vorzugsweise eine Dichte von ≥ 5.9 g/cm³ auf Beispielsweise weist der gesinterte Kompositelektrolyt eine Dichte von 6.0 g/cm³ bis 6.5 g/cm³ oder von 6.0 g/cm³ bis 6.3 g/cm³ auf.

Ein weiterer Aspekt der vorliegenden Erfindung betrifft ein Verfahren zur Herstellung eines gesinterten Kompositelektrolyts, wie hierin beschrieben, umfassend die Schritte:
i) Bereitstellung einer sinterbaren Kompositelektrolyt-Zusammensetzung, wie hierin beschrieben,
ii) Sintern der sinterbaren Kompositelektrolyt-Zusammensetzung bei Temperaturen von ≤ 1300 °C und einer Fügezeit von < 5 h.

Die erfindungsgemäße sinterbare Kompositelektrolyt-Zusammensetzung kann im Allgemeinen durch Vermischen des Elektrolyts und des mindestens einen in dem Elektrolyt verteilten Materials bereitgestellt werden. Das Sintern erfolgt bei Temperaturen von ≤ 1300 °C oder von 800 bis ≤ 1300 °C, beispielsweise von 900 bis ≤ 1300 °C, vorzugsweise für insgesamt < 5 h oder für 3 bis < 5 h. Das Sintern kann in einem einzigen kontinuierlichen Vorgang oder in mehreren verschiedenen und zeitlich getrennten Schritten ausgeführt werden. Vorzugsweise erfolgt das Sintern in einem einzigen kontinuierlichen Vorgang. In einer Ausführungsform erfolgt das Sintern mit verschiedenenTemperaturrampen.

Ein weiterer Vorteil ist, dass die erfindungsgemäße sinterbare Kompositelektrolyt-Zusammensetzung im gesinterten Zustand eine gute Ionenleitfähigkeit (O²⁻) aufweist und somit für eine Brennstoffzelle, vorzugsweise Festoxidbrennstoffzelle, oder eine Abgassonde oder einHochtemperatur-Gassensor (>500°C) verwendet werden kann.

Aufgrund der Vorteile, die das erfindungsgemäße gesinterte Kompositelektrolyt bietet, betrifft die vorliegende Erfindung daher auch die Verwendung des gesinterten Kompositelektrolyts, wie hierin beschrieben, in einer Brennstoffzelle, vorzugsweise einer Festoxidbrennstoffzelle, einer Abgassonde oder einem Hochtemperatur-Gassensor.

Ein weiterer Aspekt der vorliegenden Erfindung betrifft daher eine Brennstoffzelle, vorzugsweise Festoxidbrennstoffzelle, Abgassonde oder Hochtemperatur-Gassensor enthaltend den gesinterten Kompositelektrolyt, wie hierin beschrieben.

## Patentansprüche

1. Sinterbare Kompositelektrolyt-Zusammensetzung, umfassend:
a) ein Elektrolyt ausgewählt aus der Gruppe bestehend aus 8YSZ, 10Sc1CeSZ, 10Sc1AlSZ, 10Sc2YbSZ, 3YSZ, 6ScSZ und Mischungen hiervon, und
b) ein in dem Elektrolyt verteiltes Material in einer Menge von 0.1 bis 15.0 Gew.-%, bezogen auf das Gesamtgewicht des Elektrolyts, wobei das Material eine durchschnittliche Partikelgröße *d*₅₀ von 1 bis 80 nm aufweist und mindestens zwei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon umfasst.

2. Sinterbare Kompositelektrolyt-Zusammensetzung gemäß Anspruch 1, wobei die sinterbare Kompositelektrolyt-Zusammensetzung den Elektrolyt in einer Menge von 85 bis 99.9 Gew.-%, bezogen auf das Gesamtgewicht der Zusammensetzung, umfasst.

3. Sinterbare Kompositelektrolyt-Zusammensetzung gemäß Anspruch 1 oder 2, wobei der Elektrolyt eine durchschnittliche Partikelgröße dso von 0.5 bis 5 µm aufweist und/oder der Elektrolyt eine Partikelgröße *d*₈₀ von < 5 µm aufweist.

4. Sinterbare Kompositelektrolyt-Zusammensetzung gemäß einem der vorherigen Ansprüche, wobei das in dem Elektrolyt verteilte Material mindestens drei Materialien ausgewählt aus der Gruppe umfassend 8YSZ, Al₂O₃, MgO, Al, Mg, 3YSZ, 6ScSZ, 10Sc1CeSZ, 10Sc1AlSZ, 10Sc2YbSZ und Mischungen hiervon umfasst.

5. Sinterbare Kompositelektrolyt-Zusammensetzung gemäß einem der vorherigen Ansprüche, wobei die sinterbare Kompositelektrolyt-Zusammensetzung das in dem Elektrolyt verteilte Material in einer Menge von 0.2 bis 10.0 Gew.-%, bezogen auf das Gesamtgewicht des Elektrolyts, umfasst.

6. Sinterbare Kompositelektrolyt-Zusammensetzung gemäß einem der vorherigen Ansprüche, wobei das in dem Elektrolyt verteilte Material eine durchschnittliche Partikelgröße *d*₅₀ von 2 bis 50 nm aufweist.

7. Sinterbare Kompositelektrolyt-Zusammensetzung gemäß einem der vorherigen Ansprüche, wobei das in dem Elektrolyt verteilte Material in Form von Nanopulver oder Nanofasern vorliegt.

8. Sinterbare Kompositelektrolyt-Zusammensetzung gemäß einem der vorherigen Ansprüche, wobei die sinterbare Kompositelektrolyt-Zusammensetzung zusätzlich ein weiteres Material mit einer durchschnittlichen Partikelgröße *d*₅₀ von 1 bis 5 µm umfasst.

9. Sinterbare Kompositelektrolyt-Zusammensetzung gemäß Anspruch 8, wobei die sinterbare Kompositelektrolyt-Zusammensetzung das weitere Material in einer Menge von 0.1 bis 1.0 Gew.-%, bezogen auf das Gesamtgewicht des Elektrolyts, umfasst.

10. Gesinterter Kompositelektrolyt, umfassend die sinterbare Kompositelektrolyt-Zusammensetzung nach einem der Ansprüche 1 bis 9.

11. Gesinterter Kompositelektrolyt gemäß Anspruch 10, wobei der gesinterte Kompositelektrolyt durch Sintern der sinterbaren Kompositelektrolyt-Zusammensetzung bei Temperaturen von ≤ 1300 °C und einer Fügezeit von < 5 h gasdicht ist und eine Dichte von ≥ 5.9 g/cm³ aufweist.

12. Verfahren zur Herstellung eines gesinterten Kompositelektrolyts gemäß Anspruch 10 oder 11, umfassend die Schritte
i) Bereitstellung einer sinterbaren Kompositelektrolyt-Zusammensetzung gemäß einem der Ansprüche 1 bis 9,
ii) Sintern der sinterbaren Kompositelektrolyt-Zusammensetzung bei Temperaturen von ≤ 1300 °C und einer Fügezeit von < 5 h.

13. Verwendung des gesinterten Kompositelektrolyts gemäß Anspruch 10 oder 11 in einer Brennstoffzelle, vorzugsweise einer Festoxidbrennstoffzelle, einer Abgassonde oder einem Hochtemperatur-Gassensor.

14. Brennstoffzelle, vorzugsweise Festoxidbrennstoffzelle Abgassonde oder Hochtemperatur-Gassensor enthaltend den gesinterten Kompositelektrolyt gemäß Anspruch 10 oder 11.

## Claims

1. A sinterable composite electrolyte composition comprising
a) an electrolyte selected from the group consisting of 8YSZ, 10Sc1CeSZ, 10Sc1AlSZ, 10Sc2YbSZ, 3YSZ, 6ScSZ and mixtures thereof, and
b) a material distributed in the electrolyte in an amount of from 0.1 to 15.0% by weight relative to the total weight of the electrolyte, wherein the material has an average particle size *d*₅₀ from 1 to 80 nm and comprises at least two materials selected from the group comprising 8YSZ, Al₂O₃, MgO, Al, Mg, 3YSZ, 6ScSZ, 10Sc1CeSZ, 10Sc1AlSZ, 10Sc2YbSZ and mixtures thereof.

2. The sinterable composite electrolyte composition according to claim 1, wherein the sinterable composite electrolyte composition comprises the electrolyte in an amount of from 85 to 99.9% by weight, relative to the total weight of the composition.

3. The sinterable composite electrolyte composition according to claim 1 or 2, wherein the electrolyte has an average particle size *d*₅₀ from 0.5 to 5 µm and/or the electrolyte has a particle size *d*₈₀ of < 5 µm.

4. The sinterable composite electrolyte composition according to any one of the preceding claims, wherein the material distributed in the electrolyte comprises at least three materials selected from the group comprising 8YSZ, Al₂O₃, MgO, Al, Mg, 3YSZ, 6ScSZ, 10Sc1CeSZ, 10Sc1AlSZ, 10Sc2YbSZ and mixtures thereof.

5. The sinterable composite electrolyte composition according to any one of the preceding claims, wherein die sinterable composite electrolyte composition comprises the material distributed in the electrolyte in an amount of from 0.2 to 10.0% by weight relative to the total weight of the electrolyte.

6. The sinterable composite electrolyte composition according to any one of the preceding claims, wherein the material distributed in the electrolyte has an average particle size *d*₅₀ from 2 to 50 nm.

7. The sinterable composite electrolyte composition according to any one of the preceding claims, wherein the material distributed in the electrolyte is present in the form of nanopowder or nanofibres.

8. The sinterable composite electrolyte composition according to any one of the preceding claims, wherein the sinterable composite electrolyte composition additionally comprises a further material having an average particle size *d*₅₀ from 1 to 5 µm.

9. The sinterable composite electrolyte composition according to claim 8, wherein the sinterable composite electrolyte composition comprises the further material in an amount of from 0.1 to 1.0% by weight relative to the total weight of the electrolyte.

10. A sintered composite electrolyte comprising the sinterable composite electrolyte composition according to any one of claims 1 to 9.

11. The sintered composite electrolyte according to claim 10, wherein the sintered composite electrolyte becomes gas-impermeable by sintering the sinterable composite electrolyte composition at temperatures of ≤ 1300 °C and for a bonding time of < 5 h and has a density of ≥ 5.9 g/cm³.

12. A method for manufacturing a sintered composite electrolyte according to claim 10 or 11, comprising the steps of:
i) Preparing a sinterable composite electrolyte composition according to any one of claims 1 to 9,
ii) Sintering the sinterable composite electrolyte composition at temperatures of ≤ 1300 °C and for a bonding time of < 5 h.

13. Use of the sintered composite electrolyte according to claim 10 or 11 in a fuel cell, preferably a solid oxide fuel cell, an exhaust gas probe or a high-temperature gas sensor.

14. A fuel cell, preferably a solid oxide fuel cell, exhaust gas probe or high-temperature gas sensor containing the sintered composite electrolyte according to claim 10 or 11.

## Revendications

1. Une composition d'electrolyte composite frittable comprenant
a) un électrolyte choisi dans le groupe consistant en 8YSZ, 10Sc1CeSZ, 10Sc1AlSZ, 10Sc2YbSZ, 3YSZ, 6ScSZ et des mélanges de ceux-ci, et
b) un matériau réparti dans l'électrolyte en une quantité de 0,1 à 15,0% en poids par rapport au poids total de l'électrolyte, dans lequel le matériau a une taille moyenne de particules de 1 à 80 nm et comprend au moins deux matériaux choisis dans le groupe comprenant 8YSZ, Al2O3, MgO, Al, Mg, 3YSZ, 6ScSZ, 10Sc1CeSZ, 10Sc1AlSZ, 10Sc2YbSZ et des mélanges de ceux-ci.

2. La composition d'electrolyte composite frittable selon la revendication 1, dans lequel l'électrolyte composite frittable comprend l'électrolyte dans une proportion en une quantité allant de 85 et 99,9% en poids, par rapport au poids total de la composition.

3. La composition d'electrolyte composite frittable selon la revendication 1 ou 2, dans lequel l'électrolyte a une taille moyenne de particules de 50 à 0,5 µm et / ou l'électrolyte a une taille de particules inférieure à 5 µm.

4. La composition d'electrolyte composite frittable selon l'une quelconque des revendications précédentes, dans lequel le matériau réparti dans l'électrolyte comprend au moins trois matériaux choisis dans le groupe comprenant 8YSZ, Al2O3, MgO, Al, Mg, 3YSZ, 6ScSZ, 10Sc1CeSZ, 10Sc1AlSZ, 10Sc2YbSZ et des mélanges de ceux-ci.

5. La composition d'électrolyte composite frittable selon l'une quelconque des revendications précédentes, dans laquelle la composition d'électrolyte composite frittable comprend le matériau réparti dans l'électrolyte en une quantité allant de 0,2 à 10,0% en poids par rapport au poids total de l'électrolyte.

6. La composition d'électrolyte composite frittable selon l'une quelconque des revendications précédentes, dans laquelle le matériau réparti dans l'électrolyte a une taille moyenne de particules de 2 à 50 nm.

7. La composition d'électrolytie composite frittable selon l'une quelconque des revendications précédentes, dans laquelle le matériau réparti dans l'électrolyte est présent sous la forme de nanopoudres ou de nanofibres.

8. La composition d'électrolyte composite frittable selon l'une quelconque des revendications précédentes, dans laquelle la composition d'électrolyte composite frittable comprend en outre un autre matériau ayant une taille moyenne de particules de 1 à 5 µm.

9. La composition d'électrolyte composite frittable selon la revendication 8, dans laquelle la composition d'électrolyte composite frittable comprend l'autre matériau en une quantité allant de 0,1 à 1,0% en poids par rapport au poids total de l'électrolyte.

10. Un electrolyte composite fritté comprenant la composition d'electrolyte composite frittable selon l'une quelconque des revendications 1 à 9.

11. L'electrolyte composite fritté selon la revendication 10, dans lequel l'électrolyte composite fritté devient imperméable aux gaz par frittant la composition d'electrolyte composite frittable à des températures inférieures ou égales à 1300 ° C et pour une durée de liaison inférieure à 5h et a une densité supérieure ou égale à 5,9 g / cm3.

12. Un Procédé de fabrication d'un électrolyte composite fritté selon la revendication 10 ou 11, comprenant les étapes consistant à:
i) Préparation d'une composition d'électrolyte composite frittable selon l'une quelconque des revendications 1 à 9,
ii) Fritter la composition d'électrolyte composite frittable à des températures inférieures ou égales à 1300 ° C et pour une durée de liaison inférieur à 5 h.

13. Utilisation de l'électrolyte composite fritté selon la revendication 10 ou 11 dans une pile à combustible, de préférence une pile à combustible à oxyde solide, une sonde de gaz d'échappement ou un capteur de gaz à haute température.

14. Une pile à combustible, de préférence une pile à combustible à oxyde solide, une sonde de gaz d'échappement ou une sonde de gaz à haute température contenant l'électrolyte composite fritté selon la revendication 10 ou 11.
